# EUROPEAN PATENT APPLICATION

(11) **EP 4 722 903 A1**
(43) Date of publication of application: **08.04.2026**
(21) Application number: 24813793.7
(22) Date of filing: 07.03.2024
(51) Int. Cl.: G06F 9/451

(54) **CLOUD DESKTOP DISPLAY METHOD, CLOUD DESKTOP TERMINAL, AND STORAGE MEDIUM**

(30) Priority: 30.05.2023 CN 202310630891
(71) Applicant: Cloud Intelligence Assets Holding (Singapore) Private Limited, Singapore 189554 (SG)
(72) Inventor: TIAN, Wei, Shanghai 200120 (CN); MIN, Hongbo, Shanghai 200120 (CN); REN, Jinkui, Shanghai 200120 (CN); ZHANG, Xiantao, Hangzhou, Zhejiang 310030 (CN)
(74) Representative: Dai, Simin
(86) International application number: PCT/CN2024/080639
(87) International publication number: WO 2024/244587

(57) **Abstract**

Embodiments of this application provide a cloud desktop display method, a cloud desktop terminal, and a storage medium. **In** this embodiment of this application, the cloud desktop terminal is modified. After an image frame sent by a cloud desktop server is received, the image frame can be displayed; backward frame interpolation prediction may be performed on the basis of the image frame and a preceding reference frame to construct a predicted frame that can be interposed before the next image frame; and on this basis, the prediction frame can be displayed before the next image frame is received. **In** this way, the cloud desktop terminal may actively perform backward frame interpolation while normally displaying the image frame acquired from the cloud desktop server, so that a display frame rate is autonomously increased in the cloud desktop terminal when the transmission frame rate of the cloud desktop server is insufficient, improving display fluency of the cloud desktop without increasing a bandwidth and a delay.

## Description

This disclosure claims priority to Chinese Patent Application No. 202310630891.8, filed with the China National Intellectual Property Administration on May 30, 2023 and entitled "CLOUD DESKTOP DISPLAY METHOD, CLOUD DESKTOP TERMINAL, AND STORAGE MEDIUM", which is incorporated herein by reference in its entirety.

### TECHNICAL FIELD

The present disclosure relates to the field of cloud computing technologies, and in particular, to a cloud desktop display method, a cloud desktop terminal, and a storage medium.

### BACKGROUND

A cloud desktop is also referred to as desktop virtualization and a cloud computer, which is a new mode for replacing a conventional computer. After the cloud desktop is used, a user does not need to purchase a computer host, and all components included in the host are virtualized in a back-end server. In addition, a front-end device is mainly configured to implement interactive operations, so that an experience effect consistent with that of a computer can be achieved through cooperation of the front-end device and the back-end server.

Currently, a front-end display frame rate of the cloud desktop keeps consistent with a back-end transmission frame rate of the cloud desktop. When the cloud desktop changes sharply, the back-end transmission frame rate often decreases due to network congestion, and the front-end display frame rate also decreases synchronously, resulting in insufficient display smoothness of the cloud desktop.

### SUMMARY

Various aspects of the present disclosure provide a cloud desktop display method, a cloud desktop terminal, and a storage medium, to improve display smoothness of a cloud desktop.

An embodiment of the present disclosure provides a cloud desktop display method, applicable to a cloud desktop terminal, and including:
displaying, after receiving an N^{th} image frame sent by a cloud desktop server, the N^{th} image frame;
constructing, based on the N^{th} image frame and an (N-1)^{th} image frame received from the cloud desktop server, a predicted frame preceding an (N+1)^{th} image frame; and
displaying the predicted frame before receiving the (N+1)^{th} image frame, where
N is an integer greater than 1.

An embodiment of the present disclosure further provides a cloud desktop terminal, including a memory, a processor, and a communication assembly, where
the memory is configured to store one or more computer instructions; and
the processor is coupled to the memory and the communication assembly, and is configured to execute the one or more computer instructions, to perform the cloud desktop display method described above.

An embodiment of the present disclosure further provides a computer-readable storage medium storing computer instructions, the computer instructions, when executed by one or more processors, causing the one or more processors to perform the cloud desktop display method described above.

In this embodiment of the present disclosure, the cloud desktop terminal is modified. After an image frame sent by the cloud desktop server is received, the image frame may be displayed. In addition, backward frame interpolation prediction may be performed based on the image frame and a previous reference frame of the image frame, to construct a predicted frame that may be interpolated before a next image frame. Based on this, the predicted frame may be displayed before the next image frame is received. In this way, the cloud desktop terminal may actively perform backward frame interpolation in addition to normally presenting the image frame obtained from the cloud desktop server, so that a display frame rate is autonomously increased in the cloud desktop terminal when a transmission frame rate of the cloud desktop server is insufficient, to improve the display smoothness of the cloud desktop without increasing a bandwidth and a delay.

The foregoing summary is merely for the purpose of the specification, and is not intended to constitute a limitation in any manner. In addition to the exemplary aspects, implementations, and features described above, further aspects, implementations, and features of the present disclosure will be easily understood with reference to the accompanying drawings and the following detailed descriptions.

### BRIEF DESCRIPTION OF DRAWINGS

In the accompanying drawings, unless otherwise specified, the same reference numerals throughout a plurality of accompanying drawings represent the same or similar parts or elements. The accompanying drawings are not necessarily drawn to scale. It should be understood that, the accompanying drawings only depict some implementations disclosed according to the present disclosure, and therefore should not be considered as limiting the scope of the present disclosure.
FIG. 1 is a schematic flowchart of a cloud desktop display method according to an exemplary embodiment of the present disclosure.
FIG. 2 is a schematic diagram of logic of a cloud desktop display method according to an exemplary embodiment of the present disclosure.
FIG. 3a to FIG. 3c are schematic diagrams of an application scenario according to an exemplary embodiment of the present disclosure.
FIG. 4 is a schematic structural diagram of a cloud desktop terminal according to another exemplary embodiment of the present disclosure.

### DETAILED DESCRIPTION

To make the objectives, technical solutions, and advantages of embodiments of the present disclosure more comprehensible, the following clearly and completely describes the technical solutions of the present disclosure with reference to specific embodiments and the corresponding accompanying drawings of the present disclosure. Clearly, the described embodiments are merely some but not all of the embodiments of the present disclosure. Based on the embodiments of the present disclosure, all other embodiments obtained by a person of ordinary skill in the art without creative efforts shall fall within the protection scope of the present disclosure.

Currently, due to instability of a transmission frame rate, display smoothness of a cloud desktop is insufficient. Therefore, in some embodiments of the present disclosure, a cloud desktop terminal is modified. After an image frame sent by a cloud desktop server is received, the image frame may be displayed. In addition, backward frame interpolation prediction may be performed based on the image frame and a previous reference frame of the image frame, to construct a predicted frame that may be interpolated before a next image frame. Based on this, the predicted frame may be displayed before the next image frame is received. In this way, the cloud desktop terminal may actively perform backward frame interpolation in addition to normally presenting the image frame obtained from the cloud desktop server, so that a display frame rate is autonomously increased in the cloud desktop terminal when a transmission frame rate of the cloud desktop server is insufficient, to improve the display smoothness of the cloud desktop without increasing a bandwidth and a delay.

The following describes the technical solutions provided in the embodiments of the present disclosure in detail with reference to the accompanying drawings.

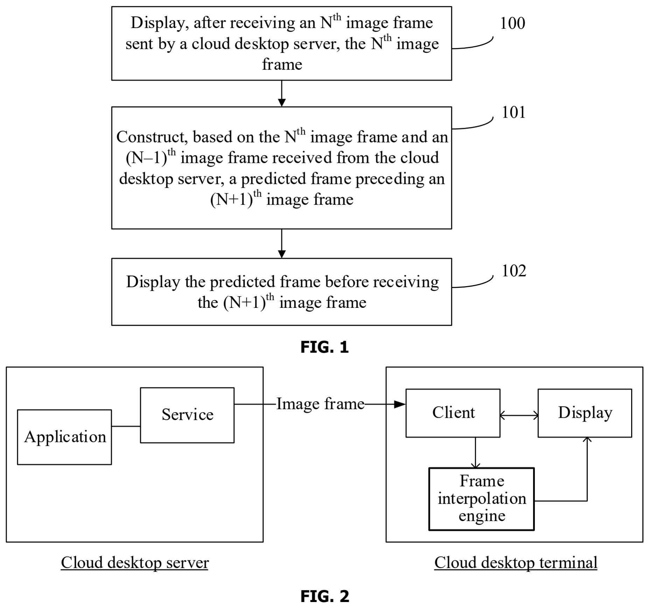

FIG. 1 is a schematic flowchart of a cloud desktop display method according to an exemplary embodiment of the present disclosure. The method may be performed by a data processing apparatus, the data processing apparatus may be implemented as software, hardware, or a combination of software and hardware, and the data processing apparatus may be integrated in a cloud desktop terminal. Refer to FIG. 1. The method may include the following steps.

Step 100: Display, after receiving an N^{th} image frame sent by a cloud desktop server, the N^{th} image frame.

Step 101: Construct, based on the N^{th} image frame and an (N-1)^{th} image frame received from the cloud desktop server, a predicted frame preceding an (N+1)^{th} image frame.

Step 102: Display the predicted frame before receiving the (N+1)^{th} image frame.

Where N is an integer greater than 1.

The cloud desktop display method provided in this embodiment may be applied to various application scenarios in which a cloud desktop is used. The application scenarios are not limited in this embodiment.

The cloud desktop technology mainly relates to the cloud desktop server and the cloud desktop terminal. Data exchange is performed between the cloud desktop server and the cloud desktop terminal depending on a network. The cloud desktop terminal may transmit data of keyboard and mouse operations to the cloud desktop server, and the cloud desktop server may simulate a cloud desktop interface based on the data of the keyboard and mouse operations, and then transmit the cloud desktop interface back to the cloud desktop terminal. The cloud desktop server usually transmits the cloud desktop interface to the cloud desktop terminal in a video stream manner. In this embodiment, the cloud desktop interface is described as image frames.

The applicant finds in a research process that a transmission frame rate of the cloud desktop server is unstable. Especially when an event of dragging a window or scrolling a page occurs, the display of the cloud desktop changes sharply, causing a large amount of data to be encoded and transmitted through the network. The transmission frame rate of the cloud desktop server decreases, and a display frame rate of the cloud desktop terminal also synchronously decreases. Consequently, display smoothness of the cloud desktop is insufficient.

Therefore, this embodiment innovatively provides a cloud desktop display solution, in which the cloud desktop terminal performs frame interpolation at a suitable occasion, to improve the display smoothness of the cloud desktop.

FIG. 2 is a schematic diagram of logic of a cloud desktop display method according to an exemplary embodiment of the present disclosure. Refer to FIG. 2. A frame interpolation engine may be added to a cloud desktop terminal to perform related logical steps of the cloud desktop display method provided in this embodiment, and the frame interpolation engine may communicate with an existing client in the cloud desktop terminal. In this embodiment, each time the client in the cloud desktop terminal receives an image frame sent by a cloud desktop server, the frame interpolation engine may be triggered to perform the cloud desktop display method provided in this embodiment once.

Refer to FIG. 1. In step 100, a current image frame may be displayed after the current image frame sent by the cloud desktop server is received. For ease of description, in this embodiment, the current frame is described as an N^{th} image frame. It should be understood that N may be any integer greater than 1. For the image frames received by the cloud desktop terminal from the cloud desktop server, in this embodiment, the image frames may be displayed based on a conventional display solution. In other words, display processing may be directly performed after the image frames are received. In addition, in this embodiment, the transmission frame rate of the cloud desktop server is not interfered with, and the cloud desktop terminal may increase the display frame rate of the cloud desktop terminal as required.

Still refer to FIG. 1. In step 101, the predicted frame preceding the (N+1)^{th} image frame may be constructed based on the N^{th} image frame and the (N-1)^{th} image frame received from the cloud desktop server.

In this embodiment, the N^{th} image frame and the (N-1)^{th} image frame may be used as a reference, to perform backward frame prediction. In this way, the predicted frame may be used for supplementarily presenting an intermediate state of a related desktop object between the N^{th} image frame and the (N+1)^{th} image frame. The related desktop object herein refers to a desktop object appearing in the N^{th} image frame and a desktop object newly added in the (N+1)^{th} image frame.

In a preferred implementation, it is provided that, after the N^{th} image frame sent by the cloud desktop is received, whether the desktop object in the N^{th} image frame only undergoes linear motion may be further predicted. The desktop object in the image frame herein may include, but is not limited to, various display windows, display icons, and the like. This is not limited herein. There may be a plurality of desktop objects included in the image frame. In this implementation, the foregoing prediction operation may be performed on all the desktop objects included in the image frame. It is predicted whether each desktop object in the N^{th} image frame only undergoes the linear motion subsequently. The linear motion may also be understood as rectilinear motion, and means that a motion track of an object is a straight line. In this embodiment, the foregoing prediction operation may be completed by using a plurality of implementations, and specific implementations are described in detail below.

In this implementation, if it is predicted that the desktop object in the N^{th} image frame only undergoes the linear motion, the foregoing backward frame interpolation operation is performed. Because it is predicted that the desktop object in the N^{th} image frame only undergoes the linear motion, backward frame prediction may be accurately implemented based on a linear motion trend of the desktop object, and a constructed predicted frame conforms to the linear motion trend of the desktop object in the N^{th} image frame, and may be well connected to the (N+1)^{th} image frame, thereby ensuring picture smoothness.

Certainly, in addition to the foregoing preferred implementation, in this embodiment, another trigger condition may be used to trigger the backward frame interpolation operation in step 101, for example, a user actively initiates a frame interpolation start instruction in the cloud desktop terminal, etc. The cloud desktop terminal may even perform the foregoing backward frame interpolation operation on each image frame received from the cloud desktop server without configuring the trigger condition. The display frame rate of the cloud desktop terminal can be effectively improved. This is not limited in this embodiment herein.

A specific implementation of constructing the predicted frame is described in detail below.

In addition, in this embodiment, there may be one or more predicted frames constructed in step 101. A quantity of the predicted frames is not limited in this embodiment.

Based on this, refer to FIG. 1. In step 102, the predicted frame may be displayed before the (N+1)^{th} image frame is received. During actual application, a display occasion of the predicted frame may be determined based on a motion moment represented by the predicted frame. For example, if the predicted frame represents an intermediate state at 0.1 ms after the N^{th} image frame, the predicted frame may be displayed at 0.1 ms after the N^{th} image frame is displayed. When there are a plurality of predicted frames constructed in step 101, display occasions respectively corresponding to the plurality of predicted frames may also be determined in this manner. In this way, the plurality of predicted frames may be sequentially displayed.

After the (N+1)^{th} image frame sent by the cloud desktop server is received, the (N+1)^{th} image frame may be displayed. In this way, from a perspective of sensory experience, the cloud desktop terminal may interpolate one or more predicted frames between the received N^{th} image frame and (N+1)^{th} image frame to present an intermediate motion state of the desktop objects in the N^{th} image frame and the (N+1)^{th} image frame, so that display from the N^{th} image frame to the (N+1)^{th} image frame is smoother.

In conclusion, in this embodiment, the cloud desktop terminal is modified. After an image frame sent by the cloud desktop server is received, the image frame may be displayed. In addition, backward frame interpolation prediction may be performed based on the image frame and a previous reference frame of the image frame, to construct a predicted frame that may be interpolated before a next image frame. Based on this, the predicted frame may be displayed before the next image frame is received. In this way, the cloud desktop terminal may actively perform backward frame interpolation in addition to normally presenting the image frame obtained from the cloud desktop server, so that the display frame rate is autonomously increased in the cloud desktop terminal when the transmission frame rate of the cloud desktop server is insufficient, to improve the display smoothness of the cloud desktop without increasing a bandwidth and a delay.

In the foregoing or following embodiments, the plurality of implementations may be used to predict whether the desktop object in the N^{th} image frame only undergoes the linear motion.

In an optional implementation, an evaluation condition may be predefined. Based on this, if the N^{th} image frame satisfies a specified evaluation condition, it is predicted that the desktop object in the N^{th} image frame only undergoes the linear motion.

An exemplary evaluation condition may include a first condition and a second condition. The first condition includes that image positions of a desktop object that has a change in the N^{th} image frame and in the (N-1)^{th} image frame are consistent; and the second condition includes that no operation event other than a scrolling operation and a dragging operation occurs within specified duration before the N^{th} image frame is received. Having a change means that there is a difference in a desktop object between the current image frame and the previous image frame. The difference includes a content difference and/or a position difference, or the like.

It should be noted that during actual application, because a time interval between two adjacent image frames is usually short, usually, only a single keyboard and mouse operation event occurs. Correspondingly, there is usually one desktop object that has a change in the N^{th} image frame and the (N-1)^{th} image frame. Certainly, in an extremely special case, there may be a plurality of desktop objects that have a change in the N^{th} image frame and the (N-1)^{th} image frame. In this case, a plurality of changed desktop images may be separately evaluated. If the plurality of desktop images all satisfy the evaluation condition, then it is determined that the desktop objects in the N^{th} image frame only undergo the linear motion.

Based on this, refer to FIG. 2. After receiving the N^{th} image frame, the frame interpolation engine in the cloud desktop terminal may first evaluate the N^{th} image frame based on the evaluation condition. If the image positions of the desktop object that has a change in the N^{th} image frame and the (N-1)^{th} image frame are consistent; and if no operation event other than the scrolling operation and the dragging operation occurs within the specified duration before the N^{th} image frame is received, it may be determined that the desktop object in the N^{th} image frame only undergoes the linear motion.

During actual application, the cloud desktop server may determine an image position of a desktop object that has a change in each image frame, and send the image position to the cloud desktop terminal. In this way, the cloud desktop terminal may receive the N^{th} image frame and the image position of the desktop object that has a change in the N^{th} image frame sent by the cloud desktop server. The image position refers to a pixel position of the desktop object in the image frame. Generally, the pixel position may be represented in a form of a pixel coordinate. This is not limited herein. For example, when the desktop object is a browser window, the image position refers to a pixel position of the browser window in an entire desktop interface. Certainly, the cloud desktop terminal herein may alternatively perform picture comparison between the image frames, to autonomously determine the desktop object that has a change in the image frame. This is not limited to the foregoing implementation in which the cloud desktop server provides the image position.

In the exemplary evaluation condition, if the N^{th} image frame satisfies the foregoing exemplary evaluation condition, it indicates that the linear motion that the desktop object in the N^{th} image frame undergoes is page scrolling. In this case, the desktop object that has a change is usually a window, for example, a folder window or a browser window.

To further ensure evaluation accuracy, in the foregoing exemplary evaluation condition, it may be further included that a plurality of consecutive image frames preceding the N^{th} image frame all satisfy the first condition and the second condition. The plurality of consecutive image frames preceding the N^{th} image frame refer to a plurality of consecutive image frames counted backward from the N^{th} image frame. For example, it may be determined whether all of the N^{th} image frame, the (N-1)^{th} image frame, and an (N-2)^{th} image frame satisfy the foregoing first condition and the second condition. If all of the N^{th} image frame, the (N-1)^{th} image frame, and the (N-2)^{th} image frame satisfy the foregoing first condition and the second condition, it can be determined that the desktop object in the N^{th} image frame only undergoes the linear motion.

Based on the foregoing exemplary evaluation condition, frame interpolation may be performed when the desktop object in the N^{th} image frame only undergoes the linear motion such as page scrolling, to improve the display smoothness of the cloud desktop.

In addition to the foregoing exemplary evaluation condition, in this embodiment, other evaluation conditions may further be supported, to find other types of linear motion of the desktop object in the N^{th} image frame.

For example, the evaluation condition may include a third condition and a fourth condition. The third condition may include that the desktop objects that have a change in the N^{th} image frame and the (N-1)^{th} image frame are consistent; and the second condition may include that no operation event other than a unidirectional movement operation occurs within the specified duration before the N^{th} image frame is received. The unidirectional movement operation may include an operation of moving a window or an icon performed by using an arrow key of a keyboard, or the like. Certainly, the exemplary evaluation condition may further include that the plurality of consecutive image frames preceding the N^{th} image frame all satisfy the third condition and the fourth condition. If the N^{th} image frame satisfies the exemplary evaluation condition, it indicates that the linear motion that the desktop object in the N^{th} image frame undergoes is unidirectional dragging, and the desktop object that has a change is usually a window or an icon. Based on the exemplary evaluation condition, frame interpolation may be performed when the desktop object in the N^{th} image frame only undergoes the linear motion such as unidirectional dragging, to improve the display smoothness of the cloud desktop.

In this embodiment, evaluation on the N^{th} image frame under a plurality of evaluation conditions may be supported at the same time. When the N^{th} image frame includes a plurality of desktop objects that have a change, if evaluation conditions respectively satisfied by the plurality of desktop objects are not completely the same, it may also be determined that the desktop objects in the N^{th} image frame only undergo the linear motion.

By using the foregoing optional implementation, whether the desktop object in the image frame only undergoes the linear motion can be predicted by analyzing some information that is convenient to obtain without performing motion analysis on the image frame. This can effectively reduce computational pressure caused to the cloud desktop terminal.

In this embodiment, in addition to that the implementation in which the evaluation condition is preset may be used to predict whether the desktop object in the N^{th} image frame only undergoes the linear motion, other implementations may also be used. For example, the cloud desktop terminal may directly perform motion analysis on a limited quantity of image frames preceding the N^{th} image frame, and predict, with reference to a keyboard and mouse operation situation, whether the desktop object in the N^{th} image frame only undergoes the linear motion. This embodiment is not limited thereto.

In the foregoing or following embodiments, the predicted frame may be constructed by using the plurality of implementations.

In an optional implementation, motion estimation may be performed based on the (N-1)^{th} image frame and the N^{th} image frame, to determine a motion vector corresponding to a target desktop object that has a change in the N^{th} image frame; and display data corresponding to the target desktop object subjected to linear motion for specified duration is calculated based on the motion vector, to construct the predicted frame.

It should be noted that a predicted frame that can be interpolated between the N^{th} image frame and the (N+1)^{th} image frame is constructed herein. The predicted frame reflects an intermediate motion state of the desktop object that undergoes the linear motion in the N^{th} image frame in a process of moving from "a position of the desktop object in the N^{th} image frame" to "a position of the desktop object in the (N+1)^{th} image frame". To ensure this, optionally, in this embodiment, a time interval between receiving of the N^{th} image frame and receiving of the (N+1)^{th} image frame may be estimated based on the transmission frame rate of the cloud desktop server. When the predicted frame is constructed, it is ensured that motion duration referred to during calculation does not exceed the time interval. Therefore, the foregoing specified duration may be less than interval duration between a receiving moment corresponding to the N^{th} image frame and a receiving moment corresponding to the (N+1)^{th} image frame.

In this implementation, a required predicted frame may be constructed based on a motion estimation technology. A basic principle of the motion estimation technology is to estimate a motion direction and a motion distance of the same object according to a position change of the object between two image frames, to generate a motion vector of the object. In this embodiment, various motion estimation algorithms, existing or likely to emerge in the future, can be used to perform the motion estimation operation herein. The motion estimation algorithm used in this embodiment is not limited.

In this implementation, desktop objects in two adjacent image frames may be compared. If a certain desktop object differs between the two image frames, the desktop object may be determined as a target desktop object in the later image frame. The process may be completed in the cloud desktop server. Because the cloud desktop server may learn content in each image frame, such a comparison operation has a sufficient execution foundation for the cloud desktop server. In addition, the cloud desktop server may provide description information of the target desktop object that has a change in the N^{th} image frame to the cloud desktop terminal. The description information herein may include, but is not limited to, an image position of the desktop object in the image frame and/or an object identifier of the desktop object. Certainly, the process may alternatively be completed in the cloud desktop terminal. This is not limited herein.

In an exemplary solution, the N^{th} image frame is divided into several image blocks; and motion estimation is separately performed on the several image blocks. Specifically, for each image block in the N^{th} image frame, a position of the image block in the (N-1)^{th} image frame may be searched, and a relative offset between the positions of the same image block in the N^{th} image frame and the (N-1)^{th} image frame is obtained; and the obtained relative offset is usually referred to as a motion vector. A size of the image block may be flexibly set according to a requirement, and is not limited herein.

In this exemplary solution, motion vectors corresponding to the image blocks in the N^{th} image frame may be generated through motion estimation. If a plurality of motion vectors are generated through the motion estimation, a target motion vector satisfying a preset requirement may be selected from the plurality of motion vectors as the motion vector corresponding to the target desktop object in the N^{th} image frame. Here, the target desktop object only undergoes the linear motion. Therefore, the motion vector of the target desktop object is singular. In this exemplary implementation, a proper single motion vector may be determined for the target desktop object.

In the exemplary solution, it is further provided that, the motion vectors respectively corresponding to each image block included in the N^{th} image frame may be further deduplicated; and the proper motion vector is selected for the target desktop object in the N^{th} image frame from candidate motion vectors remained after deduplication. As mentioned above, the time interval between the two adjacent image frames is very short. Therefore, a quantity of the target desktop objects in the N^{th} image frame is usually one. Based on this, beginning from any candidate motion vector remained after deduplication, a quantity of image blocks around an image block corresponding to the candidate motion vector that are applicable to the candidate motion vector is detected, to determine a respective quantity of image blocks corresponding to each candidate motion vector; and a target candidate motion vector corresponding to a largest quantity of image blocks is selected from the candidate motion vectors as the motion vector corresponding to the target desktop object. Certainly, in an extremely special case, if there are a plurality of target desktop objects in the N^{th} image frame, image blocks respectively included in the target desktop objects may be separately determined, a motion vector related to an image block included in a single target desktop object is used as a candidate motion vector of the target desktop object, and the foregoing selection logic is executed, to separately determine proper motion vectors for each target desktop object.

It should be noted that, in this optional implementation, other solutions may be used to select a proper motion vector for the target desktop object in the N^{th} image frame. This is not limited to the foregoing exemplary solutions.

In this optional implementation, after the proper motion vector is selected for the target desktop object in the N^{th} image frame, display data corresponding to the target desktop object subjected to the linear motion for the specified duration may be calculated based on the motion vector, to construct the predicted frame. In this way, motion simulation may be performed on the target desktop object according to the motion vector of the target desktop object, to determine the display data corresponding to the target desktop object in the predicted frame.

For different types of linear motion, calculation solutions that are not completely the same may be used to calculate the display data. Using an example in which the linear motion corresponding to the target desktop object is page scrolling, an exemplary calculation solution may be: determining a motion area in an image area corresponding to the target desktop object in the N^{th} image frame; respectively calculating motion positions of image blocks in the motion area after the specified duration based on the motion vector; determining an incompletely obstructed image block based on the calculated motion positions; and determining image data in the incompletely obstructed image block as the display data. The motion area is an area of a desktop object that has a difference between the N^{th} image frame and the (N-1)^{th} image frame. The motion area is usually a portion of the desktop object. For example, when the desktop object is a browser window, the motion area is usually a page display area in the browser window.

It can be known that, based on a motion trend of the target desktop object, each image block in the motion area continues its linear motion after the N^{th} image frame. However, because other areas of the target desktop object do not change, some image blocks subjected to the motion may be obstructed by the other areas. Therefore, in this exemplary calculation solution, the incompletely obstructed image block may be determined, and the image data in the incompletely obstructed image block is used as the display data. When the motion vector is known, different predicted frames may be constructed by adjusting specified duration used. During actual application, the motion vector may be represented by using a direction and a distance. In this case, the specified duration may be converted into a coefficient of the distance, to calculate the motion position of the image block. For example, if the motion vector is mv(x, y), and the specified duration is half of the interval duration between the receiving moment corresponding to the N^{th} image frame and the receiving moment corresponding to the (N+1)^{th} image frame, the motion position of the image block after the specified duration may be calculated based on the motion vector mv(x/2, y/2).

For other types of linear motion, exemplary calculation solutions may alternatively be provided. For example, for the foregoing unidirectional dragging, a motion position of each image block corresponding to the target desktop object in the N^{th} image frame after the specified duration may be calculated based on the motion vector of the target desktop object, and image data in all image blocks corresponding to the target desktop image is reserved, thereby constructing a predicted frame after the specified duration.

As mentioned above, a linear motion type of the target desktop object can already be determined in step 101. Therefore, a calculation solution matching the linear motion type of the target desktop object may be selected for the target desktop object, to construct the predicted frame.

In conclusion, in this embodiment, the predicted frame may be constructed for the N^{th} image frame by using the plurality of implementations, and the constructed predicted frame conforms to a linear motion trend of the target desktop object that is to undergo the linear motion in the N^{th} image frame, so that the predicted frame can accurately display an intermediate motion state of the target desktop object. In this way, the predicted frame may be interpolated into the N^{th} image frame and the (N+1)^{th} image frame, thereby improving the display smoothness of the cloud desktop.

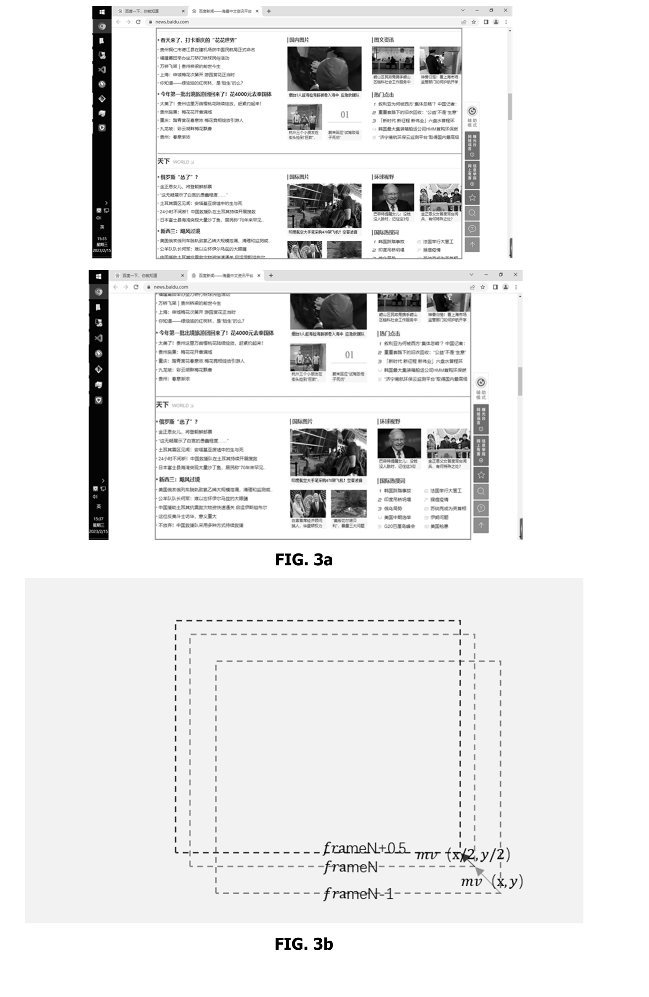

FIG. 3a to FIG. 3c are schematic diagrams of an application scenario according to an exemplary embodiment of the present disclosure. In the application scenario, a browser window in a full-screen state is displayed in an image frame frame2 received by a cloud desktop terminal from a cloud desktop server.
(1) The cloud desktop terminal receives the frame2, and may immediately decode and display the frame2 without a delay.
(2) A frame interpolation engine in the cloud desktop terminal may be started to work. The frame interpolation engine determines whether image positions of a desktop object (that is, the browser window in the figures) that has a change in the frame2 and in a frame1 are consistent; determines whether no operation event other than a scrolling operation and a dragging operation occurs during a period from receiving of the frame1 to receiving of the frame2; and determines whether all of the frame2, the frame1, and a frame0 satisfy the foregoing two conditions, and if all of the frame2, the frame1, and the frame0 satisfy the foregoing two conditions, step (3) is performed.
(3) The frame interpolation engine may predict and generate a frame2.5 by using the frame1 and the frame2, and display the frame2.5 before a frame3 arrives.
(4) The cloud desktop terminal receives the frame3, and immediately decodes and displays the frame3 without a delay.
(5) Execute determining logic in step (2) herein. If yes, proceed to step (6).
(6) The frame interpolation engine may predict and generate a frame3.5 by using the frame2 and the frame3, and display the frame3.5 before a frame4 arrives.
(7) Repeat the foregoing process.

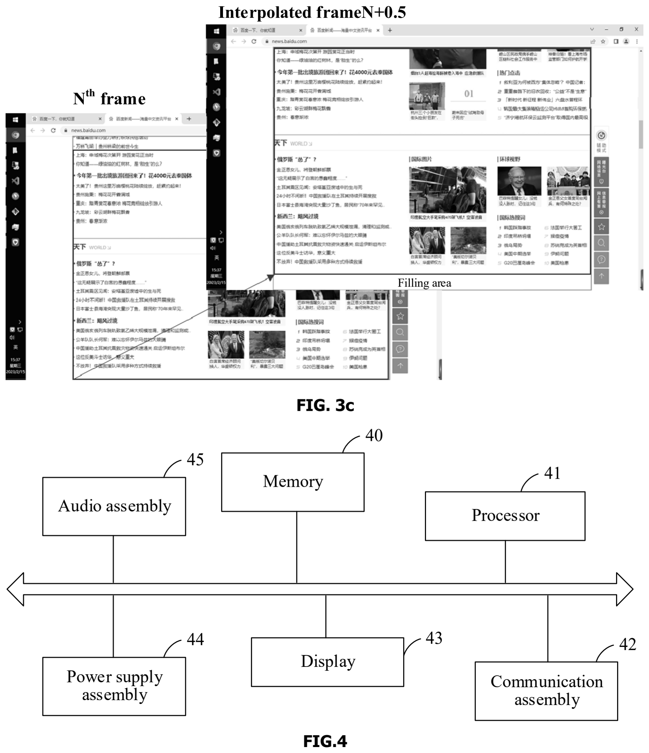

Refer to FIG. 3a. The browser windows in the frame2 and the frame1 are both in the full-screen state, and therefore, the image positions are consistent. With reference to determining under the other two conditions, in the foregoing step (2), it is assumed that a determining result is yes. Still refer to FIG. 3b. FIG. 3b shows that a motion distance in a motion vector determined by performing motion estimation between a frameN and a frameN-1 is mv(x, y), and a motion direction is shown by an arrow in FIG. 3b. Based on this, a motion area (an area boxed by a black line) determined in the browser window in FIG. 3a may be used as a reference. It may be calculated based on the motion vector that a movement distance of the motion area in a predicted frame frameN+0.5 relative to the frameN is mv(x/2, y/2), and the motion direction remains unchanged. Refer to FIG. 3c. The frameN+0.5 shown in the figure may be obtained. An area that does not have display data exists in a browser window in the frameN+0.5. In this embodiment, the area may be filled with white to serve as a filling area. However, it should be understood that, during actual application, the small-range white area existing in the predicted frame does not affect visual experience of a user.

In conclusion, frame interpolation may be implemented between image frames generated due to page scrolling in a cloud desktop. In this way, when a transmission frame rate of the cloud desktop server is reduced due to page scrolling, a display frame rate may be autonomously improved in the cloud desktop terminal, thereby improving display smoothness of the cloud desktop. In the entire process, there is no need to add any bandwidth, and there is no display delay in an original image frame. In the application scenario in FIG. 3a to FIG. 3c, the display frame rate of the cloud desktop terminal may be doubled. It should be understood that when a quantity of single frame interpolation is larger, the display frame rate of the cloud desktop terminal may be improved to a larger extent.

It should be noted that, in some processes described in the foregoing embodiments and the accompanying drawings, a plurality of operations occurring in a specific sequence are included. However, it should be clearly understood that these operations may not be performed in the sequence in which the operations occur in this specification or may be performed in parallel. The sequence numbers of the operations are, for example, 101 and 102, merely for distinguishing between different operations, and do not indicate any execution sequence. In addition, the processes may include more or fewer operations, and the operations may be performed in sequence or in parallel. It should be noted that, descriptions such as "first" and "second" in this specification are used for distinguishing between different conditions and the like, do not indicate a sequence, and are not limited to a fact that "first" and "second" are different types.

FIG. 4 is a schematic structural diagram of a cloud desktop terminal according to another exemplary embodiment of the present disclosure. As shown in FIG. 4, the cloud desktop terminal includes: a memory 40, a processor 41, and a communication assembly 42, where
the processor 41 is coupled to the memory 40 and the communication assembly 42, and is configured to execute a computer program in the memory 40, to:
display, after receiving an N^{th} image frame sent by a cloud desktop server, the N^{th} image frame;
construct, based on the N^{th} image frame and an (N-1)^{th} image frame received from the cloud desktop server, a predicted frame preceding an (N+1)^{th} image frame; and
display the predicted frame before receiving the (N+1)^{th} image frame, where
N is an integer greater than 1.

In an optional embodiment, after receiving the N^{th} image frame sent by the cloud desktop server, the processor 41 may be further configured to:
predict whether a desktop object in the N^{th} image frame only undergoes linear motion; and
perform, if it is predicted that the desktop object in the N^{th} image frame only undergoes the linear motion, an operation of the constructing, based on the N^{th} image frame and the (N-1)^{th} image frame received from the cloud desktop server, the predicted frame preceding the (N+1)^{th} image frame.

In an optional embodiment, the processor 41 is further configured to:
predict, if the N^{th} image frame satisfies a specified evaluation condition, that the desktop object in the N^{th} image frame only undergoes the linear motion, where
the evaluation condition includes a first condition and a second condition, and the first condition includes that image positions of a desktop object that has a change in the N^{th} image frame and in the (N-1)^{th} image frame are consistent; and the second condition includes that no operation event other than a scrolling operation and a dragging operation occurs within specified duration before the N^{th} image frame is received.

In an optional embodiment, the evaluation condition further includes that a plurality of consecutive image frames preceding the N^{th} image frame all satisfy the first condition and the second condition.

In an optional embodiment, when constructing the predicted frame preceding the (N+1)^{th} image frame based on the N^{th} image frame and the (N-1)^{th} image frame received from the cloud desktop server, the processor 41 may be specifically configured to:
perform motion estimation based on the (N-1)^{th} image frame and the N^{th} image frame, to determine a motion vector corresponding to a target desktop object that has a change in the N^{th} image frame; and
calculate, based on the motion vector, display data corresponding to the target desktop object subjected to linear motion for specified duration, to construct the predicted frame, where
the specified duration is less than interval duration between a receiving moment corresponding to the N^{th} image frame and a receiving moment corresponding to the (N+1)^{th} image frame.

In an optional embodiment, when performing motion estimation based on the (N-1)^{th} image frame and the N^{th} image frame, to determine the motion vector corresponding to the target desktop object that has a change in the N^{th} image frame, the processor 41 may be specifically configured to:
divide the N^{th} image frame into several image blocks;
separately perform motion estimation on the several image blocks; and
select, if a plurality of motion vectors are generated through the motion estimation, a target motion vector satisfying a preset requirement from the plurality of motion vectors as the motion vector corresponding to the target desktop object.

In an optional embodiment, if the N^{th} image frame includes one target desktop object, when selecting the target motion vector satisfying the preset requirement from the plurality of motion vectors as the motion vector corresponding to the target desktop object, the processor 41 may be specifically configured to:
deduplicate motion vectors respectively corresponding to the image blocks included in the N^{th} image frame;
detect, beginning from any candidate motion vector remained after deduplication, a quantity of image blocks around an image block corresponding to the candidate motion vector that are applicable to the candidate motion vector, to determine a respective quantity of image blocks corresponding to each candidate motion vector; and
select, from the candidate motion vectors, a target candidate motion vector corresponding to a largest quantity of image blocks as the motion vector corresponding to the target desktop object.

In an optional embodiment, if the linear motion corresponding to the target desktop object is page scrolling, when calculating, based on the motion vector, display data corresponding to the target desktop object subjected to motion for specified duration, the processor 41 may be specifically configured to:
determine a motion area in an image area corresponding to the target desktop object in the N^{th} image frame;
respectively calculate motion positions of image blocks in the motion area after the specified duration based on the motion vector;
determine an incompletely obstructed image block based on the calculated motion positions; and
determine image data in the incompletely obstructed image block as the display data.

In an optional embodiment, the desktop object is a window or an icon, and the linear motion includes page scrolling or unidirectional dragging.

In an optional embodiment, the cloud desktop server determines an image position of a desktop object that has a change in each image frame, and sends the image position to the cloud desktop terminal.

Further, as shown in FIG. 4, the cloud desktop terminal may further include other components such as a display 43, a power supply assembly 44, and an audio assembly 45. Only some components are schematically provided in FIG. 4, which does not mean that the cloud desktop terminal includes only the components shown in FIG. 4.

It should be noted that, for technical details of the foregoing embodiments of the cloud desktop terminal, related descriptions in the foregoing method embodiments may be used as a reference. For brevity, details are not described herein again, but this should not cause a loss to the protection scope of the present disclosure.

Correspondingly, an embodiment of the present disclosure further provides a computer-readable storage medium storing a computer program, and the computer program, when executed, can implement the steps in the foregoing method embodiments.

The memory in FIG. 4 is configured to store the computer program, and may be configured to store various other data to support operations on a computing platform. Examples of the data include instructions of any application or method, contact data, contact list data, a message, a picture, a video, and the like used for being operated on the computing platform. The memory may be implemented by using any type of volatile or non-volatile storage device or a combination thereof, such as a static random access memory (SRAM), an electrically erasable programmable read-only memory (EPROM), an erasable programmable read-only memory (EPROM), a programmable read-only memory (PROM), a read-only memory (ROM), a magnetic memory, a flash memory, a magnetic disc, or an optical disc.

The communication assembly in FIG. 4 is configured to facilitate communication in a wired or wireless manner between a device in which the communication assembly is located and another device. The device in which the communication assembly is located may access a wireless network based on a communication standard, for example, mobile communication networks such as Wi-Fi, 2G, 3G, 4G/LTE, or 5G, or a combination thereof. In an exemplary embodiment, the communication assembly receives a broadcast signal or broadcast related information from an external broadcast management system through a broadcast channel. In an exemplary embodiment, the communication assembly further includes a near field communication (NFC) module, to promote short-range communication. For example, the NFC module may be implemented based on a radio frequency identification (RFID) technology, an infrared data association (IrDA) technology, an ultra-wideband (UWB) technology, a Bluetooth (BT) technology, and other technologies.

The display in FIG. 4 includes a screen, and the screen may include a liquid crystal display (LCD) and a touch panel (TP). If the screen includes the touch panel, the screen may be implemented as a touchscreen, to receive an input signal from a user. The touch panel includes one or more touch sensors, to sense a touch, a slide, and a gesture on the touch panel. The touch sensor may not only sense a boundary of a touch or slide operation, but also detect duration and pressure related to the touch or slide operation.

The power supply assembly in FIG. 4 provides power to various components of a device in which the power supply assembly is located. The power supply assembly may include a power supply management system, one or more power supplies, and other components associated with generating, managing, and allocating power for the device in which the power supply assembly is located.

The audio assembly in FIG. 4 may be configured to output and/or input an audio signal. For example, the audio assembly includes a microphone (MIC). When a device in which the audio assembly is located is in an operation mode, such as a call mode, a recording mode, and a speech recognition mode, the microphone is configured to receive an external audio signal. The received audio signal may be further stored in the memory or sent by using the communication assembly. In some embodiments, the audio assembly further includes a speaker, configured to output the audio signal.

A person skilled in the art should understand that the embodiments of the present disclosure may be provided as a method, a system, or a computer program product. Therefore, the present disclosure may use a form of hardware-only embodiments, software-only embodiments, or embodiments combining software and hardware aspects. Moreover, the present disclosure may use a form of a computer program product that is implemented on one or more computer-usable storage media (including but not limited to a disk memory, a CD-ROM, an optical memory, and the like) that include computer-usable program code.

The present disclosure is described with reference to the flowcharts and/or the block diagrams of the method, the device (system), and the computer program product according to the embodiments of the present disclosure. It should be understood that each process and/or block in the flowcharts and/or the block diagrams, and combinations of the processes and/or the blocks in the flowcharts and/or the block diagrams can be implemented by using computer program instructions. These computer program instructions may be provided to a general-purpose computer, a special-purpose computer, an embedded processor, or a processor of another programmable data processing device to generate a machine, such that an apparatus configured to implement specified functions in one or more processes in the flowcharts and/or one or more blocks in the block diagrams is generated by using instructions executed by the computer or the processor of the another programmable data processing device.

The computer program instructions may alternatively be stored in a computer-readable memory that can instruct the computer or the another programmable data processing device to work in a specific manner, so that the instructions stored in the computer-readable memory generate a manufactured product that includes an instruction apparatus. The instruction apparatus implements the specific functions in one or more processes in the flowcharts and/or one or more blocks in the block diagrams.

The computer program instructions may alternatively be loaded onto the computer or other programmable data processing devices, such that a series of operations and steps are performed on the computer or other programmable devices, thereby generating computer-implemented processing. Therefore, the instructions executed on the computer or other programmable devices provide steps for implementing the specific functions in one or more processes in the flowcharts and/or one or more blocks in the block diagrams.

It should be further noted that, the terms "include", "comprise", or any variant thereof is intended to cover a non-exclusive inclusion. Therefore, a process, a method, an article, or a device that includes a series of elements not only includes such elements, but also includes other elements not listed expressly, or may include elements inherent to the process, the method, the article, or the device. Unless otherwise specified, an element limited by a sentence "including a/an..." does not exclude other same elements existing in the process, the method, the article, or the device that includes the element.

It should be noted that, user information (including but not limited to user device information, user personal information, and the like) and data (including but not limited to data for analysis, data for storage, data for display, and the like) involved in the disclosure are all information and data authorized by a user or fully authorized by each party, and collection, use, and processing of related data need to comply with relevant laws, regulations, and standards of related countries and regions. In addition, a corresponding operation entry is provided for the user to choose authorization or rejection.

The foregoing descriptions are only the embodiments of the present disclosure, and are not intended to constitute a limitation on the present disclosure. For a person skilled in the art, various modifications and variations may be made to the present disclosure. Any modification, equivalent replacement, improvement, or the like made within the spirit and principle of the present disclosure falls within the protection scope of the present disclosure.

## Claims

1. A cloud desktop display method, applicable to a cloud desktop terminal, and comprising:
displaying, after receiving an N^{th} image frame sent by a cloud desktop server, the N^{th} image frame;
constructing, based on the N^{th} image frame and an (N-1)^{th} image frame received from the cloud desktop server, a predicted frame preceding an (N+1)^{th} image frame; and
displaying the predicted frame before receiving the (N+1)^{th} image frame,
wherein N is an integer greater than 1.

2. The method according to claim 1, after receiving the N^{th} image frame sent by the cloud desktop server, further comprising:
predicting whether a desktop object in the N^{th} image frame only undergoes linear motion; and
performing, in response to predicting that the desktop object in the N^{th} image frame only undergoes the linear motion, an operation of the constructing, based on the N^{th} image frame and the (N-1)^{th} image frame received from the cloud desktop server, the predicted frame preceding the (N+1)^{th} image frame.

3. The method according to claim 2, further comprising:
predicting, in response to that the N^{th} image frame satisfies a specified evaluation condition, that the desktop object in the N^{th} image frame only undergoes the linear motion,
wherein the evaluation condition comprises a first condition and a second condition, and the first condition comprises that image positions of a desktop object that has a change in the N^{th} image frame and in the (N-1)^{th} image frame are consistent; and the second condition comprises that no operation event other than a scrolling operation and a dragging operation occurs within specified duration before the N^{th} image frame is received.

4. The method according to claim 3, wherein the evaluation condition further comprises that a plurality of consecutive image frames preceding the N^{th} image frame all satisfy the first condition and the second condition.

5. The method according to claim 1, wherein the constructing, based on the N^{th} image frame and the (N-1)^{th} image frame received from the cloud desktop server, the predicted frame preceding the (N+1)^{th} image frame comprises:
performing motion estimation based on the (N-1)^{th} image frame and the N^{th} image frame, to determine a motion vector corresponding to a target desktop object that has a change in the N^{th} image frame; and
calculating, based on the motion vector, display data corresponding to the target desktop object subjected to linear motion for specified duration, to construct the predicted frame,
wherein the specified duration is less than interval duration between a receiving moment corresponding to the N^{th} image frame and a receiving moment corresponding to the (N+1)^{th} image frame.

6. The method according to claim 5, wherein the performing motion estimation based on the (N-1)^{th} image frame and the N^{th} image frame, to determine the motion vector corresponding to the target desktop object that has a change in the N^{th} image frame comprises:
dividing the N^{th} image frame into a plurality of image blocks;
separately performing motion estimation on the plurality of image blocks; and
selecting, in response to that a plurality of motion vectors are generated through the motion estimation, a target motion vector satisfying a preset requirement from the plurality of motion vectors as the motion vector corresponding to the target desktop object.

7. The method according to claim 6, wherein in response to that the N^{th} image frame comprises one target desktop object, the target motion vector satisfying the preset requirement is selected from the plurality of motion vectors as the motion vector corresponding to the target desktop object, comprising:
deduplicating motion vectors respectively corresponding to the image blocks comprised in the N^{th} image frame;
detecting, beginning from any candidate motion vector remained after deduplication, a quantity of image blocks around an image block corresponding to the candidate motion vector that are applicable to the candidate motion vector, to determine a respective quantity of image blocks corresponding to each candidate motion vector; and
selecting, from the candidate motion vectors, a target candidate motion vector corresponding to a largest quantity of image blocks as the motion vector corresponding to the target desktop object.

8. The method according to claim 5, wherein in response to that the linear motion corresponding to the target desktop object is page scrolling, the calculating, based on the motion vector, display data corresponding to the target desktop object subjected to linear motion for the specified duration, comprises:
determining a motion area in an image area corresponding to the target desktop object in the N^{th} image frame;
respectively calculating motion positions of image blocks in the motion area after the specified duration based on the motion vector;
determining an incompletely obstructed image block based on the calculated motion positions; and
determining image data in the incompletely obstructed image block as the display data.

9. The method according to claim 2, wherein the desktop object is a window or an icon, and the linear motion comprises page scrolling or unidirectional dragging.

10. The method according to claim 3, wherein the cloud desktop server determines an image position of a desktop object that has a change in each image frame, and sends the image position to the cloud desktop terminal.

11. A cloud desktop terminal, comprising a memory, a processor, and a communication assembly, wherein
the memory is configured to store one or more computer instructions; and
the processor is coupled to the memory and the communication assembly, and is configured to execute the one or more computer instructions, to perform the cloud desktop display method according to any one of claims 1 to 10.

12. A computer-readable storage medium storing computer instructions, the computer instructions, when executed by one or more processors, causing the one or more processors to perform the cloud desktop display method according to any one of claims 1 to 10.
